# Europäisches Patentamt

## European Patent Office

## Office européen des brevets

(19)

(11) Veröffentlichungsnummer: **0 233 541**
**B1**

(12) **EUROPÄISCHE PATENTSCHRIFT**

(45) Veröffentlichungstag der Patentschrift:
**06.09.89**

(51) Int. Cl.⁴: **G 03 B 42/04**

(21) Anmeldenummer: **87101448.6**

(22) Anmeldetag: **03.02.87**

(54) Vorratsmagazin für in einer lichtdichten Umhüllung befindliche Blattfilmstapel und in dem Vorratsmagazin verwendbare Umhüllung.

(30) Priorität: **14.02.86 DE 8603910 U**
**13.05.86 DE 3616069**

(43) Veröffentlichungstag der Anmeldung:
**26.08.87 Patentblatt 87/35**

(45) Bekanntmachung des Hinweises auf die Patenterteilung:
**06.09.89 Patentblatt 89/36**

(84) Benannte Vertragsstaaten:
**ES FR GB IT**

(56) Entgegenhaltungen:
**DE-C- 3 122 583**
**DE-C- 3 405 423**
**DE-U- 7 725 804**
**US-A- 3 741 386**
**US-A- 3 979 051**

(73) Patentinhaber: **Agfa-Gevaert AG,**
**D-5090 Leverkusen 1 (DE)**

(72) Erfinder: **Schmidt, Manfred, Dipl.-Ing., Ligusterweg 34,**
**D-8011 Kirchheim (DE)**
Erfinder: **Zanner, Johann, Albert-Schweitzer-Strasse 1a,**
**D-8025 Unterhaching (DE)**

ACTORUM AG

## Beschreibung

Die Erfindung betrifft ein Vorratsmagazin zum Einsetzen in eine Vorrichtung zum Entnehmen einzelner Blattfilme, vorzugsweise Röntgenblattfilme, in das Blattfilme als Stapel in einer lichtdichten, an einer Seite zu öffnenden Umhüllung einlegbar sind, wobei das Vorratsmagazin aus einer oben zumindest teilweise offenen, durch einen Deckel verschließbaren Box für den in der Umhüllung befindlichen Stapel besteht und wobei an der der zu öffnenden Seite der Umhüllung eines eingelegten Stapels gegenüberliegenden Seite der Box eine Aufwickelvorrichtung mit einer Aufwickelwelle zum Einhängen und Aufwickeln einer Aufwickellasche der Umhüllung samt dieser nach dem Verschließen des Vorratsmagazins angeordnet ist.

Ein Vorratsmagazin und/oder ein hierfür geeigneter Blattfilmstapel mit Umhüllung der eingangs genannten Art ist durch die DE-GMS 7 725 804 bekannt. Dabei muß die Aufwickellasche der Stapelumhüllung durch einen Schlitz der Aufwickelwelle hindurchgefädelt oder zwischen die Aufwickelwelle und eine an diese klappbare Klammer geklemmt werden. Dieses Vorgehen ist umständlich. Vorratsmagazine ähnlicher Art wurden auch beispielsweise in der nicht vorveröffentlichten DE-OS 3 543 024 oder der DE-PS 3 405 423 oder der DE-PS 3 122 583 beschrieben. Diese Vorratsmagazine sind nicht im Tageslichtbetrieb beladbar.

Der Erfindung liegt daher die Aufgabe zugrunde, bei einer Magazin-Filmstapel-Kombination der eingangs genannten Art eine einfachere und bequemer zu handhabende Verbindungsmöglichkeit zwischen Aufwickelwelle des Magazins und Aufwickellasche der Stapelumhüllung zu schaffen.

Diese Aufgabe wird gelöst durch die Merkmale des ersten Anspruchs. Weitere vorteilhafte Ausgestaltungen nach der Erfindung sind den Unteransprüchen entnehmbar.

Durch die Verwendung einer Klettverbindung zwischen Aufwickelwelle und Aufwickellasche wird die Herstellung dieser Verbindung sehr einfach. Diese Ausgestaltung läßt sich noch dahingehend verbessern, daß beim Einlegen des Stapels mit Umhüllung und Schließen des Magazins die Lenkung der Aufwickellasche zur Aufwickelwelle und die Befestigung der Aufwickellasche an der Aufwickelwelle automatisch erfolgen.

Die Erfindung wird anhand von Zeichnungen näher erläutert. Es zeigen:

Fig. 1 eine perspektivische Darstellung eines erfindungsgemäßen Vorratsmagazins und eines hierin verwendbaren erfindungsgemäßen Blattstapels,

Fig. 2 einen Schnitt durch den erfindungswesentlichen Teil der Vorrichtung nach Figur 1,

Fig. 3 einen Schnitt durch den erfindungswesentlichen Teil eines anderen erfindungsgemäßen Ausführungsbeispiels,

Fig. 4 eine perspektivische, teilweise aufgebrochene, teilweise auseinandergezogene Darstellung eines weiteren erfindungsgemäßen Vorratsmagazins für einen Filmpack größtmöglichen Formats,

Fig. 5 einen abgebrochenen Schnitt durch das Magazin nach Figur 4 beim Einlegen eines Filmpacks,

Fig. 6 den Schnitt nach Figur 5 in einer fortgeschrittenen Phase des Einlegens eines Filmpacks,

Fig. 7 ein Vorratsmagazin nach Figur 4 für einen Filmpack kleineren Formats,

Fig. 8 einen abgebrochenen Schnitt durch das Magazin nach Figur 7 beim Einlegen eines Filmpacks,

Fig. 9 den Schnitt nach Figur 8 in einer fortgeschrittenen Phase des Einlegens eines Filmpacks.

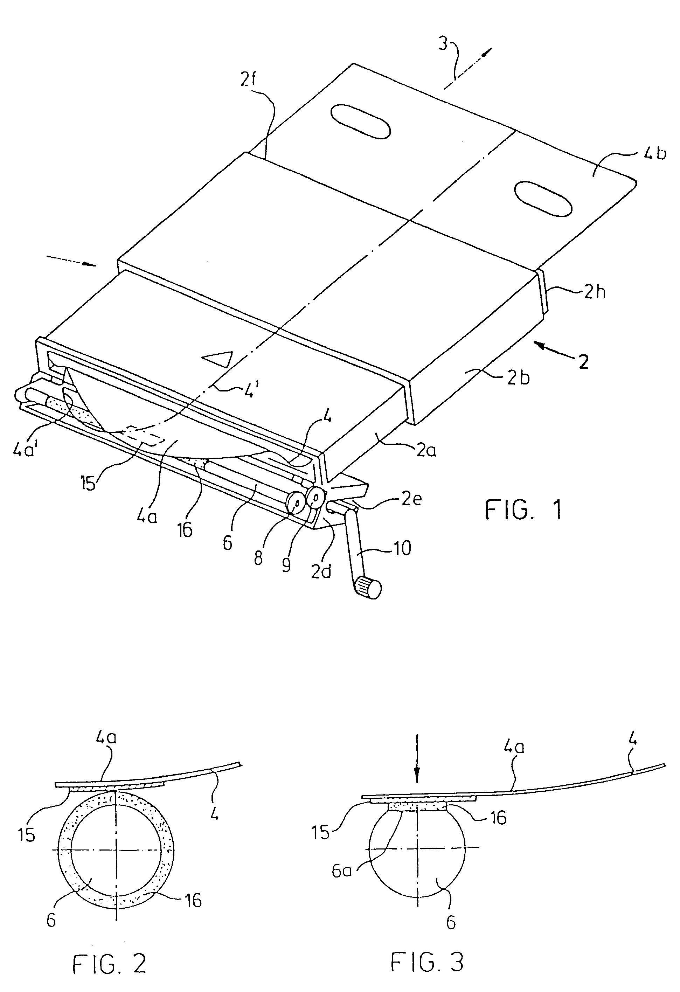

Es sind bereits Vorratsmagazine 2 bekannt, die aus einer oben nur teilweise offenen Box 2a und einem als Schieberrohr 2b ausgebildeten Deckel bestehen. Die Eingabeöffnung der Box 2a liegt dabei der in Eingaberichtung 3 des Magazins 2 in eine Vorrichtung zum Beladen von Kassetten liegenden Stirnseite 2h der Box 2a benachbart. Die Eingabeöffnung ist nur so groß, daß ein Filmstapel in die Box 2a einsetzbar und darin positionierbar ist und daß sie im vorgeschobenen Zustand des Schieberrohrs 2b durch dieses lichtdicht verschließbar ist. Die in Eingaberichtung 3 rückwärtige Magazinstirnseite 2d ist als Griffteil zum Einschieben des Magazins 2 in die Vorrichtung 1 und zum Entnehmen aus ihr ausgebildet. Bei dem Magazin 2 ist die rückwärtige Magazinstirnseite 2d außerdem als abklappbare, in ihrem angeklappten Zustand lichtdicht schließende Rückwand ausgebildet. Unmittelbar hinter ihr im Innern der Box 2a oder der Rückwand 2d ist eine Aufwickelwelle 6 an den Seitenwänden gelagert. Eine Aufwickellasche 4a einer neu eingelegten Umhüllung 4 ist an der Aufwickelwelle 6 zu befestigen. In der Umhüllung 4 befindet sich lichtdicht eingeschlossen ein nicht sichtbarer Blattfilmstapel. Die Aufwickelwelle 6 kann direkt oder über Zahnräder 8, 9 mit einer lichtdicht aus der Box 2a nach außen geführten Aufwickelkurbel 10 gekuppelt sein. Letztere kann ein klappbares, nicht gezeigtes Gelenk aufweisen, so daß sie in die in Figur 1 gezeigte Funktionsstellung oder in eine in eine Vertiefung 2e der Rückwand 2d eingeschwenkte Nichtgebrauchslage schwenkbar ist. Letztere Nichtgebrauchslage soll sie beim Einsetzen des Magazins 2 in die Vorrichtung einnehmen. Ein Magazin 2 nach Figur 1 kann so ausgebildet sein, daß an der in Einschubrichtung 3 schauenden Stirnkante 2f des Schieberdeckels 2b oberhalb der Eingabeöffnung 2c eine Abreißleiste angebracht ist. Letztere kann messer- oder sägeähnlich ausgebildet sein und etwas über die Kante 2f vorstehen.

Zur Wiederbeladung eines Magazins 2 werden sowohl die Eingabeöffnung durch Öffnen des Schieberdeckels 2b als auch die Aufwickelwelle 6 durch Öffnen der Rückwand 2d freigelegt. Dann werden von der Aufwickelwelle 6 die dort aufgewickelte Umhüllung 4 des bereits entnommenen Filmstapels abgezogen und aus der Box ein unter dem entleerten Stapel vorgesehener nicht sichtbarer Versteifungs- und Haltekarton entnommen. Letzterer weist an der Rückseite einen hochstehenden Anschlag auf. Der Haltekarton samt Anschlag dient dazu, beim Abziehen der Hülle 4 vom Stapel in einem geschlossenen Magazin 2 eine Verschiebung des Stapels oder einzelner seiner Blätter durch Mitnähme durch die Umhüllung zu verhindern.

Ein neuer Filmstapel samt Umhüllung 4 wird durch die Eingabeöffnung in die Box 2a eingelegt, wobei die Aufwickellasche 4a bis in den Bereich der Aufwickelwelle 6 geführt und an der Aufwickelwelle 6 befestigt wird. Der in Einschubrichtung 3 des Magazins 2a in die Vorrichtung stirnseitige Verschlußlappen 4b der Umhüllung soll bei geschlossenem Magazin 2 auf einfache Weise abreißbar sein und wird deshalb als Aufreißlasche 4b bezeichnet. Diese Aufreißlasche 4b also wird bei geöffnetem Magazin 2 so gelegt, daß sie nach dem Schließen des Magazins zwischen der Abreißleiste und der Oberfläche der Boxstirnseite 2h aus dem Magazin vorschaut. Diese Stellung ist in Figur 1 gezeigt. Dann wird die Kurbel 10 ausgeschwenkt und auch die Rückwand 2d geschlossen. Schließlich wird mittels und längs der Abreißleiste die Aufreißlasche 4b von Hand abgetrennt. Es kann aber auch jede andere geeignete, im Stand der Technik beschriebene Verschluß- und/oder Magazinausgestaltung zum Öffnen der Umhüllung verwendet werden. Somit ist die Umhüllung 4 in dem geschlossenen Magazin 2 stirnseitig geöffnet, so daß sie nun auch ohne merklichen Kraftaufwand nach hinten abgezogen werden kann. Daher wird nun die Kurbel 10 bewegt, wodurch die Welle 6 gedreht wird. Dabei werden Aufwickellasche 4a und Umhüllung 4 vorzugsweise völlig auf die Welle 6 aufgewickelt. Nun wird das neu beladene Magazin in das entsprechende Fach der Vorrichtung eingesetzt.

Um nun eine Aufwickellasche 4a einer Umhüllung eines Blattfilmstapels schnell und sicher und ohne besondere Geschicklichkeit an der Aufwickelwelle 6 befestigen zu können, ist gemäß den Figuren 1 und 2 an der der Aufwickelwelle 6 zuzuwendenden Seite der Aufwickellasche 4a ein Klettbandstreifen 15 angebracht. In einem Bereich, in dem Aufwickellaschen 4a von Hüllen daran zu befestigen sind, ist die Aufwickelwelle 6 mit einem Klettband 16 eingehüllt. Das an der Aufwickelwelle 6 vorgesehene Klettband 16 ist komplementär zu dem Klettbandstück 15 ausgebildet, wobei bei bekannten Klettverbindungen ein Klettband schlingenförmig und das komplementäre Klettband hakenförmig ausgebildet sind. Es wäre aber auch möglich, beide Klettbänder hakenförmig auszubilden. Gemäß Figur 3 ist das wellenseitige Klettbandstück 15 auf eine abgeflachte Stelle 6a des Wellenmantels aufgeklebt. Es wäre aber auch möglich, am Wellenmantel der Aufwickelwelle 6 eine Längsnut anzubringen und einen Klettbandstreifen 16 etwas über die Nut vorstehend in diese einzukleben, was zu einer größeren Festigkeit der Verbindung von Klettband 12 und Aufwickelwelle 6 führt. Zur Befestigung einer Aufwickellasche 4a an der Aufwickelwelle 6 wird einfach das Klettbandstück 11 einer Aufwickellasche 4a gegen das an der Aufwickelwelle 6 angeordnete Klettband 12 gedrückt. Diese Verbindung hat sich als ausreichend fest erwiesen, um eine Umhüllung 4 sicher auf die Aufwickelwelle 6 aufzuwickeln. Andererseits ist sie beim Abwickeln einer leeren Umhüllung 4 von der Welle 6 schnell und problemlos wieder zu lösen.

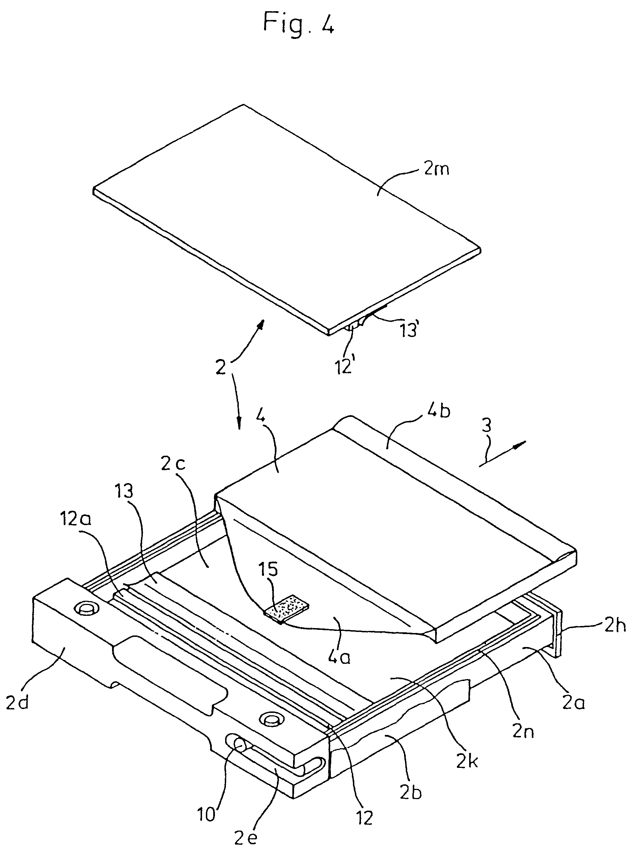

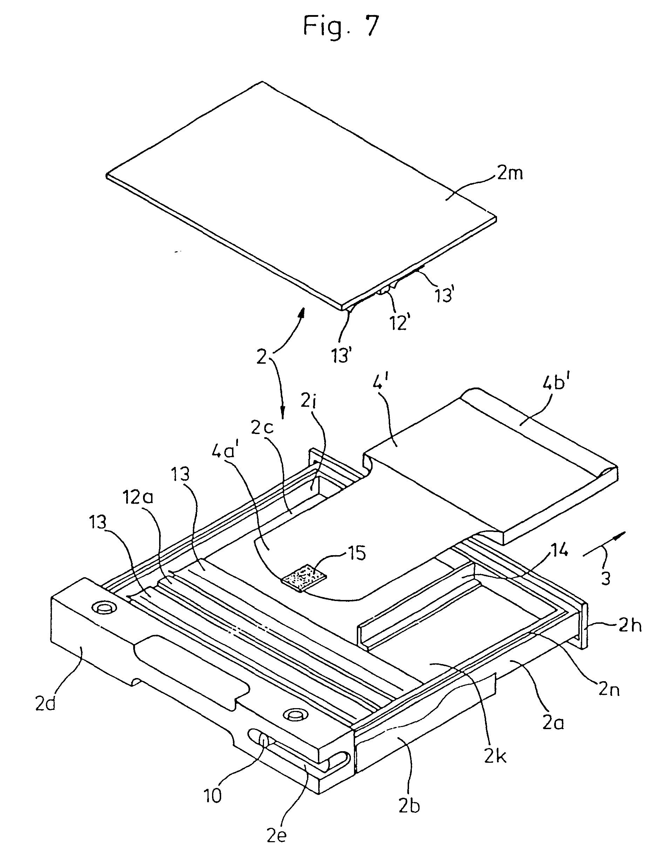

Nun gibt es Vorratsmagazine 2 der beschriebenen Art, die außen alle dieselben Maße haben, in die aber Filmstapel unterschiedlicher Blattfilmgrößen in entsprechend unterschiedlich großen Umhüllungen 4 bzw. 4' eingelegt werden können. Hierbei werden die Längskanten von unterschiedlichen Umhüllungen 4, 4' alle an derselben Magazinlängsinnenkante und stirnseitig an der Innenfläche des Magazins 2a bzw. an derselben stirnseitigen Ecke 2i zur Anlage gebracht. Die Aufwickellaschen 4a, 4a' sind dabei so bemessen, daß die Laschen 4a bzw. 4a' alle an der Aufwickelwelle 6 befestigbar sind. Dabei kommen die Klettbandstücke der Laschen 4a bzw. 4a' jedoch an unterschiedlichen Stellen der Aufwickelwelle 6 zum Anliegen. Daher ist gemäß Figur 1, in der ein zweites kleineres Format einer Umhüllung 4', 4a' strichpunktiert gezeichnet ist, das an der Aufwickelwelle 6 vorgesehene Klettband 16 unsymmetrisch zur Längsmittellinie des Magazins 2 nach der Längsseite verschoben angeordnet, an der die Umhüllungen 4, 4' sämtlicher möglicher Formate von Umhüllungen zur Anlage kommen. Das hat aber auch zur Folge, daß bei für kleinere Filmformate bestimmten Magazinen eine Anschlagleiste 12 zur Positionierung eines derartigen kleinformatigen Filmstapels weiter von der Aufwickelwelle 6 entfernt angeordnet sein muß (vgl. Figur 7), als dies bei dem Magazin für das größtmögliche Filmformat der Fall ist (vgl. Figur 4). Dementsprechend müssen die Aufwickellaschen 4a der Umhüllungen 4 für unterschiedliche Filmformate umso länger sein, je kürzer die zur Eingaberichtung 3 parallele Seite einer Umhüllung 4 ist.

Selbstverständlich sind noch andere als die gezeigten Ausführungsbeispiele nach der Erfindung möglich. So könnten die Umhüllungen 4, 4' der verschiedenen vorkommenden Blattfilmformate statt einer Aufwickellasche 4a bzw. 4a' je zwei oder mehrere Aufwickellaschen, z.B. gleichmäßig auf die Breite der Umhüllung 4 bzw. 4' verteilt angeordnet, aufweisen. In diesem Fall müßte an jeder der Aufwickellaschen einer Umhüllung ein Klettbandstreifen angeordnet sein, wobei dann auch die Klettbandstücke an der Aufwickelwelle 6 eine entsprechende Verteilung aufweisen müßten.

In den Figuren 4 bis 9 ist ein erfindungsgemäßes Ausführungsbeispiel zur automatischen Einfädelung der Aufwickellaschen 4a bis zur und zur automatischen Befestigung an der Aufwickelwelle 6 gezeigt. Dabei ist bei Hüllen 4 für kleine Filmformate das Führen und Einfädeln der langen Aufwickellaschen 4a an der Aufwickelwelle 6 schwierig. Außerdem soll eine bei völlig geschlossenem Magazin erfolgende automatische Hinführung und Einhakung der Lasche 4a an der Aufwickelwelle 6 erfolgen.

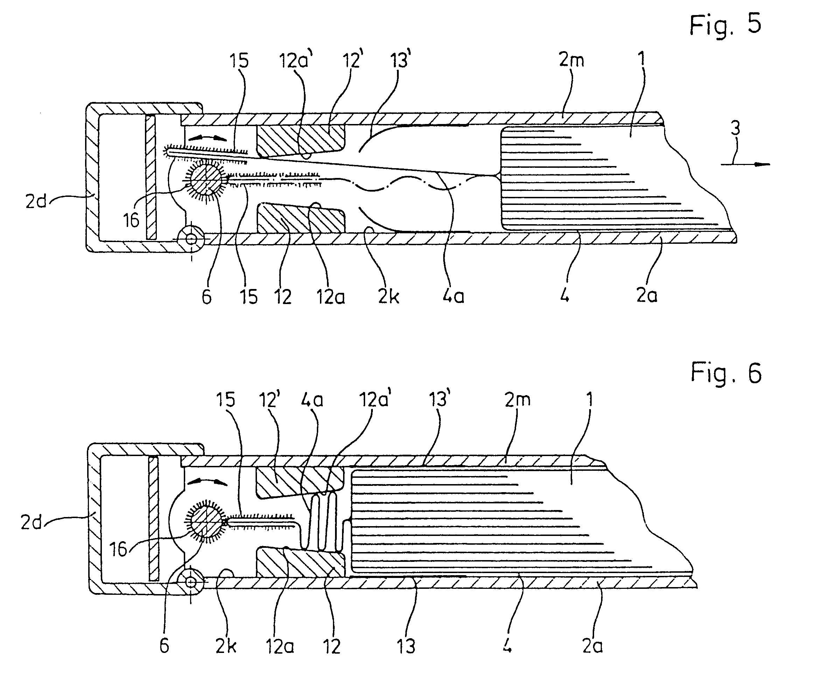

Aus diesem Grunde ist an der eine Anschlagleiste 12 aufweisenden inneren Flachseite 2k der Box 2a in Einsetzrichtung 3 vor und/oder hinter der Anschlagleiste 12 eine zu dieser parallele, trichter- oder keilförmig zur Oberkante 12a der Anschlagleiste 12 bzw. zur Welle 6 verlaufende, elastische Zunge 13 angeordnet. Da die Oberseite 2m der Box 2a zweckmäßigerweise ohnehin als getrenntes Teil gefertigt und dann mit einer Nut 2n der Box 2a verklebt oder verschweißt wird und eine Führung der Aufwickellaschen 4a symmetrisch zur Mittelebene des Magazins hin zweckmäßig ist, ist auch an die Innenseite der Oberseite 2m spiegelbildlich zur unteren Anschlagleiste 12 und unteren Zunge 13 eine obere Anschlagleiste 12' und davor und/oder dahinter eine obere Zunge 13' vorzusehen, wobei zwischen der unteren und der oberen Anschlagleiste 12 bzw. 12' ein Schlitz zum Hindurchführen und Lenken einer Aufwickellasche 4a zur Aufwickelwelle 6 besteht bleibt. Die Zungen 13 bzw. 13' weisen dann bei nicht vorhandenem Filmstapel gegen die Kanten 12a bzw. 12a'. Wird nun, insbesondere bei kleinformatigen Filmstapeln mit langen Aufwickellaschen 4a gemäß den Figuren 6 und 7, ein Filmstapel 1 mit Umhüllung 4 in die Box 2a entgegen der Pfeilrichtung 3 eingeschoben, so lenken beide aufeinanderzu laufenden elastischen Zungen 13 und 13' die jeweilige Aufwickellasche 4a zwischen den Anschlagleisten 12 und 12'hindurch, so daß sie sicher in den Bereich der Aufwickelwelle 6 gelangt. Wie in den Figuren dargestellt ist, trifft schließlich der Filmstapel 1 mit Umhüllung 4 auf die Zungen 13 und/oder 13' und klappt diese unter Ausnutzung ihrer Elastizität an die inneren Boxflächen 2k und/oder 2m, bis der Stapel an den Anschlagleisten 12 und/oder 12' zur Anlage gelangt. Dann wird der Deckel 2b geschlossen, die Stirnseite 4b der Umhüllung 4 auf eine der schon anderweitig beschriebenen Weisen geöffnet und die Umhüllung mittels der Aufwickelwelle 6 und der Kurbel 10 vom Stapel 1 abgezogen. Dieser wird durch die Anschlagleiste 12 oder Anschlagleisten 12, 12' in seiner positionierten Stellung, ausgerichtet an der Ecke 2i, beim Abziehen der Hülle 4 festgehalten.

Es wären dabei auch noch andere Ausgestaltungen möglich, die teilweise der Einfachheit halber nicht in den Zeichnungen dargestellt sind. So könnte an die Stelle eines Schiebedeckels 2b auch ein Klappdeckel treten. Bei Magazinen für kleinformatige Filmstapel, vgl. Figuren 7 bis 9, ist es sinnvoll, wenn senkrecht zur Anschlagleiste 12 eine weitere, der Stapelbreite entsprechende Positionierleiste 14 am Boden 2k der Box 2a angeordnet ist. Statt der Anbringung der Leisten 12 bzw. 12' bzw. 14 und der Zungen 13 bzw. 13' direkt an einer inneren Flachseite der Box 2a ist es auch möglich, Leisten und Zungen an je einer z.B. aus Kunststoff oder steifem Karton bestehenden Platine anzuordnen und diese in den Boden der Box 2a einzulegen bzw. innen an der Oberseite 2m zu befestigen. Eine lösbare Befestigung der Platine an der Oberseite 2m könnte beispielsweise durch Einschieben in dort vorgesehene Nuten erfolgen. Diese Ausgestaltung mit die Anschlagleisten und Zungen tragenden Platinen hat den Vorteil, daß die Platinen auswechselbar angeordnet sein können und damit ein Magazin je nach Bedarf an unterschiedliche Filmformate angepaßt werden kann. Zum Hinführen der Aufwickellasche 4a einer Umhüllung 4 zur Aufwickelwelle 6 bei bereits geschlossenem Magazin 2 kann aber auch jede andere in der Technik geläufige, vorzugsweise symmetrisch zur Mittelebene des Magazins 2 wirksame, zur Aufwickelwelle 6 weisende Führungsanordnung verwendet werden. Je kleiner das Format des Filmpacks 1, 4 ist, umso mehr Führungsmittel müssen vorgesehen sein. So ist bei dem Magazin für das größte Filmformat nur ein Satz Zungen 13, 13' und Anschlagleisten 12, 12' vorgesehen, wobei eine Aufwickellasche 4a von den keilförmig aufeinander zu geneigten Anschlagleisten 12, 12' direkt an die Aufwickelwelle 6 hingeführt wird, vgl. Figuren 5 und 6. Bei Magazinen für kleinere Filmformate kann es notwendig sein, vor den Anschlagleisten 12, 12' nochmals Zungen 13, 13' vorzusehen zum Hinführen einer entsprechend langen Aufwickellasche 4a an die Aufwickelwelle 6. Unter Umständen könnten mehrere Sätze von Anschlagleisten 12, 12' und Zungen 13, 13' hintereinander vorgesehen sein, wobei unmittelbar vor der Aufwickelwelle 6 entweder ein Zungenpaar 13, 13' oder ein Anschlagleistenpaar 12, 12' angeordnet sein kann. Im Bereich zwischen Aufwickelwelle 6 und der den Filmpack 1 haltenden Anschlagleiste 12, 12' können statt der Zungen 13, 13' auch mehrere Paare von keilförmig aufeinander zu laufenden, trichterähnlich wirkenden Leisten oder steiferen Folien oder zueinander symmetrisch angeordnete gewellte Folien vorgesehen sein.

Um nun nicht nur ein automatisches Hinführen einer Aufwickellasche 4a an die Aufwickelwelle 6, sondern auch eine automatische Befestigung der Aufwickellasche 4a an der Aufwickelwelle ohne Handhabungen bei geschlossener Rückwand 2d zu erreichen, ist an der Stirnseite der Aufwickellasche 4a ein Lappen 15 angebracht, der aus dem weichen Materialteil eines bekannten Klettverschlusses besteht. Die Aufwickelwelle 6 ist zumindest in dem Teilbereich ihrer Länge, in dem Klettbandlappen 15 mittels der Führungen 12, 13, 12', 13' auf sie zu bewegt werden können, mit einem Klettband 16, und zwar einem harten Teil des Klettbandverschlusses umwickelt oder umklebt.

Die Wirkungsweise dieser vollautomatischen Führ- und Einhängevorrichtung 12, 12', 13, 13', 15, 16 ist in den Figuren 5, 6 und 8, 9 für Filmpacks verschiedener Formate dargestellt und erkennbar. Dabei ist es günstig, wenn die Aufwickellasche 4a jeweils deutlich länger ist als die Abstände zwischen dem positionierten Filmpack 1, 4 und der Aufwickelwelle 6. Gemäß Figur 5 wird ein Filmpack 1, 4 großen Formats in ein Magazin 2 eingesetzt und entgegen Pfeilrichtung 3 bis zu den Anschlagleisten 12, 12' geschoben. Dann wird der Deckel 2b geschlossen. Der Rückdeckel 2d kann dann ebenfalls geschlossen sein. Die aufeinander zu gerichteten Zungen 13, 13' und die Keilflächen 12a, 12a' führen die Aufwickellasche 4a, ggf. in Wellenlinien, bis zur Aufwickelwelle 6. Gemäß Figur 6 kann dabei die Aufwickellasche 4a zu engen Windungen zwischen den Keilflächen 12a, 12a' zusammengeschoben sein und so die Wirkung einer das Klettbandteil 15 gegen die Aufwickelwelle 6 drückenden mäanderartigen Feder erhalten.

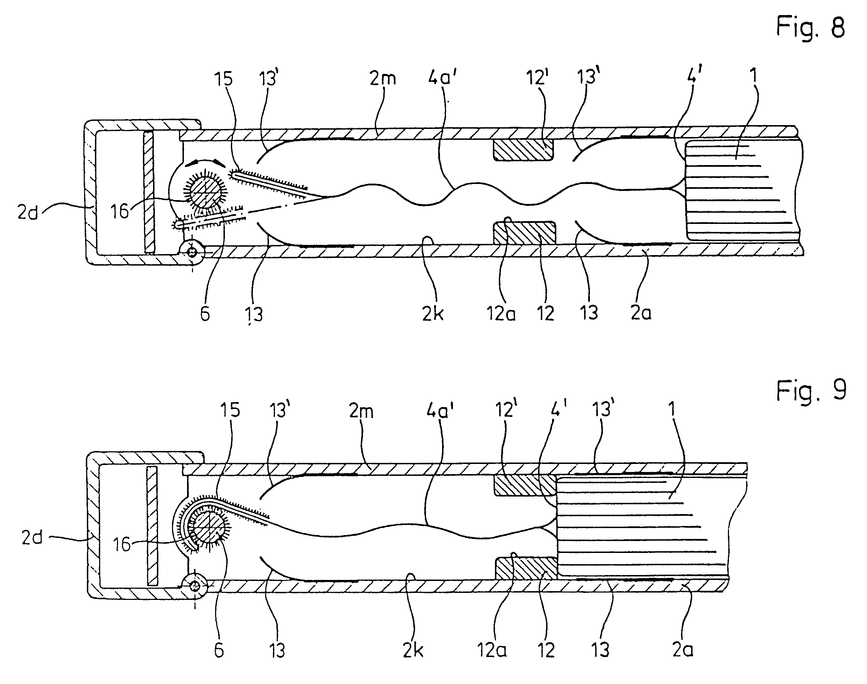

Schließlich trifft der Klettbandlappen 15 auf alle Fälle in irgendeiner Lage auf das Klettbandwellenstück 16, beispielsweise frontal, wie in Figur 5 gestrichelt und in Figur 6 gezeigt ist, oder tangential, wie ausgezogen gezeichnet in Figur 5 gezeigt ist, so daß Aufwickellasche 4a und Aufwickelwelle 6 sich über ihre Klettbandstücke 15, 16 automatisch aneinander einhängen. Wird nun die Aufwickelwelle 6 mittels der Kurbel 10 in irgendeiner Richtung gedreht, so werden zuerst der Klettbandlappen 15 und dann die Aufwickellasche 4a und schließlich die ganze Umhüllung 4 auf die Aufwickelwelle 6 aufgewickelt. Trifft beispielsweise der Klettbandlappen 15 gemäß Figur 5 tangential von oben auf die Klettbandwelle 16 und wird diese im Uhrzeigersinn gedreht, so wird der Klettbandlappen 15 in die gestrichelte Stellung zurück mitgenommen und von dort von unten her auf die Welle 6, 16 aufgewickelt. Die gezeigte Ausbildung funktioniert in jedem Falle und ist unabhängig von der Drehrichtung, in der ein Benutzer die Kurbel 10 und damit die Aufwickelwelle 6, 16 betätigt. In den Figuren 8 und 9 ist dieselbe Anordnung bzw. Funktionsweise für ein Magazin mit kleinformatigem Filmpack 1, 4 erkennbar. Dabei ist der Abstand zwischen Filmpack und Aufwickelwelle entsprechend größer, so daß die Führungsmittel 12, 12', 13, 13', wie beschrieben, umfangreicher ausgestaltet sein müssen.

Wenn die Aufwickellaschen 4a länger als der Abstand zwischen Filmpack 1, 4 und Aufwickelwelle 6 ausgebildet sind und wellenförmig verlaufen, so hat das den zusätzlichen Vorteil, daß auf der Aufwickelwelle 6 bereits mehrere Windungen aufgewickelt sind, ehe der volle Zug, der ggf. mit dem Aufreißen und Abziehen der Umhüllung verbunden ist, auf die Aufwickelwelle bzw. die Kurbel zur Wirkung kommt. Weiterhin ist es zweckmäßig, daß das Klettbandteil 15 in die Laschenflachseiten reicht, damit es sich auf alle Fälle am aufwickelwellenseitigen Klettband 16 verhakt, ganz gleich, von welcher Seite es auf dieses auftrifft.

## Patentansprüche

1. Vorratsmagazin zum Einsetzen in eine Vorrichtung zum Entnehmen einzelner Blattfilme, vorzugsweise Röntgenblattfilme, in das Blattfilme als Stapel in einer lichtdichten, an einer Seite zu öffnenden Umhüllung einlegbar sind, wobei das Vorratsmagazin aus einer oben zumindest teilweise offenen, durch einen Deckel verschließbaren Box für den in der Umhüllung befindlichen Stapel besteht und wobei an der der zu öffnenden Seite der Umhüllung eines eingelegten Stapels gegenüberliegenden Seite der Box eine Aufwickelvorrichtung mit einer Aufwickelwelle zum Einhängen und Aufwickeln einer Aufwickellasche der Umhüllung samt dieser nach dem Verschließen des Vorratsmagazins angeordnet ist, dadurch gekennzeichnet, daß zwischen der Aufwickellasche (4a) und der Aufwickelwelle (6) eine Klettverbindung (15, 16) angeordnet ist.

2. Vorratsmagazin für einen Blattfilmstapel nach Anspruch 1, dadurch gekennzeichnet, daß die Aufwickelwelle (6) in Längenbereichen, in denen Aufwickellaschen (4a; 4a') von Umhüllungen (4 bzw. 4') zu befestigen sind, mit einem Klettband (16) einer Klettverbindung (15, 16) überzogen ist.

3. Vorratsmagazin für einen Blattfilmstapel nach Anspruch 1, dadurch gekennzeichnet, daß in eine Vertiefung oder an eine Abflachung (6a) der Aufwickelwelle (6) in Längenbereichen, in denen Aufwickellaschen (4a; 4a') von Umhüllungen (4 bzw. 4') zu befestigen sind, ein Klettbandstreifen (16) einer Klettverbindung (11, 12) eingelegt bzw. aufgeklebt ist.

4. Vorratsmagazin und Blattfilmstapel nach einem der vorhergehenden Ansprüche, dadurch gekennzeichnet, daß an der Aufwickellasche (4a) ein zu dem Klettband (16) an der Aufwickelwelle (6) komplementäres Klettbandstück (15) angeordnet ist.

5. Vorratsmagazin zum Einlegen von Blattfilmstapeln unterschiedlicher Typen mit entsprechenden Umhüllungen unterschiedlicher Breite und hierfür geeignete Blattfilmstapel von unterschiedlicher, aber jeweils definierter Breite mit in voneinander unterschiedlicher, aber definierter Lage vorgesehenen Aufwickellaschen, wobei Stapel unterschiedlicher Breite jeweils an derselben Magazinlängsseite bzw. Magazinecke in Anschlag gebracht werden, nach einem der vorhergehenden Ansprüche, dadurch gekennzeichnet, daß das aufwickelwellenseitige Klettband (16) unsymmetrisch zur Längsmittelebene des Vorratsmagazins (2) in einem Längenbereich der Aufwickelwelle (6) angeordnet ist, in dem Aufwickellaschen (4a bzw. 4a') sämtlicher Typen von Umhüllungen (4 bzw. 4') der verschiedenen Blattfilmstapeltypen beim Verbinden mit der Aufwickelwelle (6) zu liegen kommen.

6. Vorratsmagazin, bei dem in der Box eine quer zur Einsetzrichtung des Stapels verlaufende Anschlagleiste zur Positionierung des Stapels in einer seiner Länge in Einsetzrichtung entsprechenden Lage vorgesehen ist, nach einem der vorhergehenden Ansprüche, dadurch gekennzeichnet, daß zwischen einer stapelseitigen Kante der Anschlagleiste (12, 12') und der Aufwickelwelle (6) zur zu den Magazinflachseiten (2k, 2m) parallelen Magazinmittelebene etwa symmetrisch angeordnete, auf die Aufwickelwelle (6) zulaufende Führungsmittel (12a, 12a', 13, 13') für die Aufwickellasche (4a) vorgesehen sind und daß die Aufwickellasche (4a) an ihrem freien Ende einen in ihre beiden Flachseiten reichenden Lappen (15) aus einem Klettbandteil trägt und die Aufwickelwelle (6) in einem Bereich, in dem Aufwickellaschen (4a) auf sie treffen, eine Umhüllung (16) aus einem das Gegenstück zum aufwickellaschenseitigen Klettbandteil (15) bildenden Klettband aufweist.

7. Vorratsmagazin und Umhüllung nach Anspruch 1 oder 6, dadurch gekennzeichnet, daß das an der Aufwickellasche (4a) vorgesehene Klettbandteil (15) weicher als das an der Aufwickelwelle (6) vorgesehene Klettband (16) ist.

8. Vorratsmagazin und Umhüllung nach den Ansprüchen 6 oder 7, dadurch gekennzeichnet, daß die Aufwickellasche (4a) länger ist als der Abstand zwischen der stapelseitigen Kante der Anschlagleiste (12, 12') und der Aufwickelwelle (6).

9. Vorratsmagazin nach einem der Ansprüche 6 bis 8, dadurch gekennzeichnet, daß an beiden inneren Flachseiten (2k, 2m) der Box (2a) je eine Anschlagleiste (12 bzw. 12') und stapelseitig vor dieser eine elastische Zunge (13 bzw. 13') vorgesehen sind, wobei beide Zungen (13, 13') zusammen trichterförmig gegen einen durch die beiden Anschlagleisten (12, 12') gebildeten, der Durchführung der Aufwickellasche (4a) dienenden Schlitz gerichtet sind.

10. Vorratsmagazin nach Anspruch 9, dadurch gekennzeichnet, daß abwechselnd Paare von Leisten (12, 12') und Paare von Zungen (13, 13') hintereinander angeordnet sind.

## Claims

1. Stock magazine for use in a device for removing single sheet films, preferably X-ray sheet films, in which sheet films can be inserted as a stack in a light-proof envelope to be opened on one side, the stock magazine comprising a box for the stack situated in the envelope, which box can be closed by means of a lid and is at least partially open at the top, and a wind-on device having a wind-on spool for attaching and winding a wind-on flap on an envelope together with it after closing the stock magazine being arranged on the side of the box opposite the side of the envelope of an inserted stack which is to be opened, characterised in that an adhesive contact (15, 16) is arranged between the wind-on flap (4a) and the wind-on spool (6).

2. Stock magazine for a sheet film stack according to claim 1, characterised in that the wind-on spool (6) in the longitudinal regions in which wind-on flaps (4a; 4a') on envelopes (4 and 4') are to be attached, is covered with an adhesive tape (16) of an adhesive contact (15, 16).

3. Stock magazine for a sheet film stack according to claim 1, characterised in that an adhesive tape strip (16) of an adhesive contact (11, 12) is inserted or adhered in a depression or on a flat surface (6a) of the wind-on spool in longitudinal regions in which wind-on flaps (4a; 4a') on envelopes (4 and 4a') on envelopes (4 and 4') are to be attached.

4. Stock magazine and sheet film stack according to one of the preceding claims, characterised in that a piece of adhesive tape (15) complementary to the adhesive tape (16) on the wind-on spool (6) is arranged on the wind-on flap(4a).

5. Stock magazine for inserting sheet film stacks of different types having appropriate envelopes of different width and sheet film stacks suitable for them of different but in each case defined width having wind-on flaps provided in positions which are different from one another but are defined, stacks of different width being brought to rest in each case on the same longitudinal side or corner of the magazine according to one of the preceding claims, characterised in that the adhesive tape (16) on the wind-on spool side is arranged unsymmetrically to the longitudinal central plane of the stock magazine (2) in a longitudinal region of the wind-on spool (6), in which wind-on flaps (4a and 4a') of all types of envelopes (4 and 4') of the various sheet film stack types come to rest when attaching to the wind-on spool (6).

6. Stock magazine in which a stop strip extending transversely to the insertion direction of the stack is provided in the box to place the stack in a position corresponding to its length in the insertion direction, according to one of the preceding claims, characterised in that guide means (12a, 12a', 13, 13') for the wind-on flap (4a) running onto the wind-on spool (6) arranged approximately symmetrically to the magazine central plane parallel to the flat sides of the magazine (2k, 2m) are provided between one edge of the stop strip (12, 12') on the stack side and the wind-on spool (6), and in that the free end of the wind-on flap (4a) has a tab (15) made from a piece of adhesive tape extending over both flat sides of the wind-on flap (4a), and the wind-on spool (6) has an envelope (16), made from an adhesive tape forming the piece opposite to the piece of adhesive tape (15) on the wind-on flap side, in a region where wind-on flaps (4a) meet with the wind-on spool (6).

7. Stock magazine and envelope according to claim 1 or 6, characterised in that the piece of adhesive tape (15) provided on the wind-on flap (4a) is softer than the adhesive tape (16) provided on the wind-on spool (6).

8. Stock magazine and envelope according to claims 6 or 7, characterised in that the wind-on flap (4a) is longer than the distance between the edge of the stop strip (12, 12') on the stack side and the wind-on spool (6).

9. Stock magazine according to one of claims 6 to 8, characterised in that a stop strip (12 and 12') is provided on each of the two inner flat sides (2k, 2m) of the box (2a) and an elastic tongue (13 and 13') is provided in front of this stop strip (12 and 12') on the stack side, both tongues (13, 13') being directed together in the shape of a funnel against a slit which serves to take-up the wind-on flap (4a) and is formed by the two stop strips (12, 12').

10. Stock magazine according to claim 9, characterised in that alternating pairs of strips (12, 12') and pairs of tongues (13, 13') are arranged one behind another.

**Revendications**

1. Magasin d'alimentation destiné à être introduit dans un dispositif de prélèvement un par un de films en feuille, de films radiographiques en feuille notamment, magasin d'alimentation dans lequel des films en feuille peuvent être empilés à l'intérieur d'une enveloppe étanche à la lumière, s'ouvrant sur un côté, le magasin d'alimentation étant constitué, pour la pile qui se trouve dans l'enveloppe, d'un boîtier ouvert, partiellement au moins, sur le dessus, pouvant être fermé par un couvercle, cependant qu'un dispositif d'enroulement, comportant un arbre d'enroulement servant à accrocher et à enrouler une languette d'enroulement de l'enveloppe et cette dernière, après la fermeture du magasin d'alimentation, est placé sur le côté du boîtier opposé au côté à ouvrir de l'enveloppe d'une pile mise en place, caractérisé en ce qu'une liaison auto-accrochante /15, 16) est placée entre la languette d'enroulement (4a) et l'arbre d'enroulement (6).

2. Magasin d'alimentation pour une pile de films en feuille selon la evendication 1, caractérisé en ce que l'arbre d'enroulement (6) est recouvert d'une bande adhésive (16) d'une liaison auto-accrochante (15, 16) sur des zones longitudinales où les languettes d'enroulement (4a ; 4a') d'enveloppes (4 et 4') sont à fixer.

3. Magasin d'alimentation pour une pile de films en feuille selon la revendication 1, caractérisé en ce qu'une bande droite auto-accrochante (16) d'une liaison auto-accrochante (11, 12) est introduite ou collée dans un évidement ou sur un méplat (6a) de l'arbre d'enroulement (6), dans des zones longitudinales où des languettes d'enroulement (4a ;4a') des enveloppes (4 et 4') sont à fixer.

4. Magasin d'alimentation et pile de films en feuille selon l'une des revendications précédentes, caractérisé en ce que sur la languette (4a) est placé un morceau de bande auto-accrochante (15) complémentaire de la bande auto-accrochante (16) de l'arbre d'enroulement (6).

5. Magasin d'alimentation pour la mise en place de piles de films en feuille de différents types avec des enveloppes correspondantes de largueur différente, et pile appropriée de films en feuille de largeur différente mais définie dans chaque cas, comportant des languettes d'enroulement prévues pour des positions différentes les unes des autres mais définies, des piles de largeur différente étant, dans chaque cas, amenées en butée contre le même côté longitudinal et le même angle du magasin, selon l'une des revendications précédentes, caractérisés en ce que la bande auto-accrochante (16), du côté de l'arbre d'enroulement, est placée dans une zone longitudinale de l'arbre d'enroulement (6) asymétriquement par rapport au plan médian longitudinal du magasin d'alimentation (2), zone dans laquelle les languettes d'enroulement (4a et 4a') de tous les types d'enveloppes (4 et 4') des différents types de films en feuille viennent se placer lors de la liaison avec l'arbre d'enroulement (6).

6. Magasin d'alimentation, dans le boîtier duquel est prévue une barrette de butée transversale à la direction d'introduction de la pile pour positionner celle-ci dans une situation correspondant à sa longueur dans la direction d'introduction, selon l'une des revendications précédentes, caractérisé en ce qu'entre une arête côté pile de la barrette de butée (12, 12') et l'arbre d'enroulement (6) sont prévus, pour la languette d'enroulement (4a), des moyens de guidage (12a, 12a', 13, 13') dirigés vers l'arbre d'enroulement (6), placés de manière sensiblement symétrique par rapport au plan médian du magasin parallèle aux côtés plats (2k, 2m) du magasin et en ce que la languette d'enroulement (4a) porte à son extrémité libre une patte (15) faite d'une pièce de bande adhésive, s'étendant sur ses deux flancs plats et l'arbre d'enroulement (6) présente, dans une zone dans laquelle les languettes d'enroulement (4a) arrivent sur lui, un gainage (16) constitué d'une bande auto-accrochante faisant pendant au morceau de bande auto-accrochante (15) côté languette d'enroulement.

7. Magasin d'alimentation et enveloppe selon la revendication 1 ou 6, caractérisé en ce que le morceau de bande auto-accrochante (15) prévu sur la languette d'enroulement (4a) est plus souple que la bande auto-adhérente (16) prévue sur l'arbre d'enroulement (6).

8. Magasin d'alimentation et enveloppe selon les revendications 6 ou 7, caractérisé en ce que la languette d'enroulement (4a) est plus longue que la distance entre l'arête côté pile de la barrette de butée (12, 12') et l'arbre d'enroulement (6).

9. Magasin d'alimentation selon l'une des revendications 6 à 8, caractérisé en ce que sur les deux côtés plats internes (2k, 2m) du boîtier (2a) sont prévues respectivement une barrette de butée (12 et 12') et devant celle-ci, côté pile, une lame élastique (13 et 13'), les deux lames (13, 13') formant ensemble entonnoir étant dirigées vers une fente formée par les deux barrettes de butée (12, 12'), servant au passage de la languette d'enroulement (4a).

10. Magasin d'alimentation selon la revendication 9, caractérisé en ce qu'alternativement des couples de barrettes (12, 12') et des couples de lames (13, 13') sont placés l'un à la suite de l'autre.

FIG. 1

FIG. 2

FIG. 3

# Fig. 4

Fig. 5

Fig. 6

Fig. 7

Fig. 8

Fig. 9

EP 0 233 541 B1